# EUROPÄISCHE PATENTSCHRIFT

(11) **EP 0 623 500 B1**
(45) Veröffentlichungstag und Bekanntmachung des Hinweises auf die Patenterteilung: **16.07.1997**
(21) Anmeldenummer: 94104872.0
(22) Anmeldetag: 28.03.1994
(51) Int. Cl.: B62B 3/10

(54) **Zusammenfaltbarer Korb**
Collapsible basket
Panier repliable

(30) Priorität: 30.04.1993 DE 9306518 U; 17.05.1993 DE 9307453 U
(43) Veröffentlichungstag der Anmeldung: 09.11.1994
(73) Patentinhaber: Juri, Johann, A-9473 Lavamünd (AT); Kraus, Erich, A-9473 Lavamünd (AT)
(72) Erfinder: Juri, Johann, A-9473 Lavamünd (AT); Kraus, Erich, A-9473 Lavamünd (AT)
(74) Vertreter: Collin, Hans, Dipl.-Ing. Dr.

(56) Entgegenhaltungen:
- EP-A- 0 308 039
- DE-U- 9 004 058
- US-A- 3 028 066

## Beschreibung

Die Erfindung betrifft einen zusammenfaltbaren Korb mit einem viereckigen Bodenteil, zwei viereckigen Längsseitenteilen und zwei viereckigen Schmalseitenteilen, wobei die jeweils benachbarten Seitenteile untereinander sowie jedes der Längsseitenteile mit dem Bodenteil gelenkig miteinander verbunden sind und der Korb an die Innenabmessungen der üblichen fahrbaren Einkaufswägen in Supermärkten etc. im wesentlichen angepaßt und in diese einstellbar ist. Dabei kann sowohl eine große Version erstellt werden, die diesen fahrbaren Einkaufskorb im wesentlichen vollständig ausfüllt, als auch eine kleinere Version, die den Einkaufswagen nur teilweise ausfüllt.

Der Vorteil eines solchen Korbes besteht darin, daß beim Füllen des Einkaufswagens die Ware direkt in den aufgeklappten, in den Einkaufswagen eingesetzten Korb gelegt werden kann und damit das Umladen in ein Auto durch Herausnehmen und Umladen des zusammenfaltbaren Korbes möglich ist, anstelle des Umladens der einzelnen Einkäufe.

Aus dem deutschen Gebrauchsmuster DE-U-9 004 058, das die Grundlage für den Oberbegriff des Anspruchs 1 dieser Anmeldung bietet, ist ein faltbarer Korb bekannt, der an die Innenabmessungen eines ganzen oder halben Einkaufswagens angepaßt ist und der aus vier untereinander gelenkig verbundenen Seitenteilen besteht. Aus der Zeichnung ist zu entnehmen, daß die Seitenteile auch mit dem Bodenteil verbunden sind. Wie die Faltung des Korbes vorzunehmen ist, ist in diesem Dokument nicht offenbart.

Die einzelnen flächigen Teile des anmeldungsgemäßen zusammenfaltbaren Korbes können dabei aus Kunststoff oder Leichtmetall sowie jedem anderen geeigneten Material bestehen. Sofern eine ausreichende Stabilität gegeben ist, können diese Einzelteile auch gitterartig durchbrochen oder durchsichtig ausgebildet werden, was der Gewichtsersparnis bzw. der Einsehbarkeit des Inneren des Korbes dient.

Die Einzelteile sind untereinander gelenktig, vorzugsweise mittels entlang der gegenseitigen Berührungskante verlaufender Scharniere, miteinander verbunden. Ein Lösen der gelenkigen Verbindungsstellen für den Übergang vom aufgeklappten in den zusammengeklappten Zustand und umgekehrt ist dabei nicht notwendig.

Lediglich die Schmalseitenteile sind dabei nicht direkt mit dem Bodenteil verbunden, sondern über einen Gurt aus flexiblem Material sind die beiden Schmalseitenteile untereinander oder gegenüber dem Bodenteil fixiert. Dadurch ist im zusammengeklappten Zustand eine parallele beabstandete Lage zwischen dem Bodenteil und den Schmalseitenteilen möglich, in welchen andere Teile eingefaltet werden können.

Bei der Anpassung an die handelsüblichen Einkaufswägen besteht eine Schwierigkeit darin, daß deren Laderaum nicht quaderförmig, sondern sowohl in Längsrichtung als auch in der Höhe und ggfs. sogar in der Querrichtung sich nach oben bzw. hinten zu trapezförmig erweitert, wodurch das Ineinanderschieben der Einkaufswägen sichergestellt wird.

Es ist daher die Aufgabe gemäß der Erfindung, einen an die Innenabmessungen eines Einkaufswagens angepaßten Korb bereitzustellen, der den nicht quaderförmigen Laderaum eines solchen Wagens im aufgeklappten Zustand im wesentlichen vollständig auszufüllen vermag, und der trotzdem so gefaltet werden kann, daß eine parallele, flächig berührende Lage jeweils zweier miteinander gelenkig verbundener Teile möglich ist.

Diese Aufgabe ist durch die kennzeichnenden Merkmale des Anspruchs 1 gelöst. Vorteilhafte Ausführungsformen ergeben sich aus den Unteransprüchen.

Abgesehen von der Anpassung der Dimension des Korbes an die Innenabmessungen des Ladevolumens der Einkaufwägen wird dies erreicht, indem beim erfindungsgemäßen Korb die Längsseitenteile nach innen, gegen die Oberseite des Bodens zu, klappbar sind, dabei jedoch die Verbindung der Längsseitenteile zu den Schmalseitenteilen an deren gegenseitigen Berührungskanten erhalten bleibt.

Dies wird erreicht, indem die Längsseitenteile aus mehreren Einzelteilen bestehen, die jeweils für sich die Form eines Dreiecks bzw. eines Dreiecks mit abgeschnittener Spitze, also eines Trapezes, besitzen. Die gelenkig ausgebildeten gemeinsamen Kanten zwischen dem Mittellängsteil und den beiden vorne und hinten angeordneten Stirnlängsteilen verlaufen von den unteren Ecken des Längsseitenteiles schräg in Richtung auf den oberen Mittelbereich zu. Je nach Dimensionierung treffen sich die zur oberen Mitte des Längsseitenteiles weisenden Enden des Mittellängsteiles sowie der Stirnlängsteile dort in einem Punkt oder in zwei getrennten Punkten, wobei in diesem oberen Mittelbereich des Längsseitenteiles auch ein viereckiger Raum, beispielsweise ein rechteckiger Raum übrigbleiben kann, der dann durch ein zusätzliches Verschlußteil 17 geschlossen wird, welches am Mittellängsteil oder an einem der Stirnlängsteile angeordnet sein kann. Durch eine Verschlußvorrichtung, die im Verschlußteil oder einem der angrenzenden Teile integriert sein kann, wird die gestreckte Lage der Einzelteile des Lägsseitenteiles (3) zueinander und dadurch der aufgeklappte Zustand des Korbes fixiert, da ja unabhängig vom Zustand des Korbes die Stirnlängsteile immer mit den Schmalseitenteilen verbunden bleiben. Die Verschlußvorrichtung kann entweder in einem Profilteil, beispielsweise einem schmalen U-Profil, bestehen, welches im aufgeklappten Zustand des Korbes entweder von oben her, oder durch Verschieben in Längsrichtung auf den oberen Mittelbereich des Mittellängsteiles und damit die Verbindungsstelle zwischen Mittellängsteil und den Stirnlängsteilen aufgebracht wird und deren fluchtende Lage zueinander fixiert. Dabei kann ein ebenfalls wieder plattenförmiges Verschlußteil im oberen Mittelbereich des Mittellängsteiles 5 vorhanden sein oder nicht. Bei Vorhandensein eines solchen Verschlußteiles kann dieses beispielsweise an der Oberkante des Mittellängsteiles gelenkig angeordnet sein, und zusätzlich mit den Enden eines die beiden Verschlußteile der beiden Längsseitenteile verbindenden Quergurt verbunden sein. Wenn der Quergurt auf den Innenseiten der Mittellängsteile sowei der Oberseite des Bodens freiliegend verläuft, entlang der Verschlußteile jedoch auf dessen Außenseiten, wird - ausreichende Flexibilität und Stabilität in Zugrichtung des Quergurtes vorausgesetzt - durch das Hinunterdrücken und enge Anlegen des Quergurtes an die Innenseiten des aufgeklappten Korbes, wie es beim Füllen mit Ware geschieht, das Verschlußteil automatisch in der aufgeklappten Stellung gehalten und somit der Korb im aufgeklappten Zustand.

Ebenso kann zusätzlich ein Längsgurt, vorzugsweise jedoch in Längsrichtung und z.T. unter dem Bodenteil verlaufend, angeordnet werden, welcher mit seinen Enden im unteren Bereich jeweils an einem der Schmalseitenteile befestigt ist. Die Funktion dieses Längsgurtes besteht im wesentlichen in der Anbindung der Schmalseitenteile und der zusätzlichen Stabilisierung des Bodenteiles.

Eine weitere Lösung zur Aufspannung des Korbes im aufgeklappten Zustand besteht darin, die gegeneinander gerichteten Enden der beiden Stirnlängsteile eines Schmalseitenteiles mit einem oder mehreren in Zugrichtung elastischen Spannsträngen zu verbinden.

Um im zusammengeklappten Zustand des Korbes die Anzahl der aneinanderliegenden Flächenteile und damit die Dicke des zusammengelegten Korbes zu minimieren, werden sinnvollerweise die Seitenteile in ihrer Höhe höchstens so hoch ausgebildet, daß die sich jeweils gegenüberliegenden Wände im zusammengeklappten Zustand nicht gegenseitig überdecken.

Eine Ausführungsform gemäß der Erfindung ist nachfolgend anhand der Figuren beispielhaft näher beschrieben.

Es zeigen
- Fig. 1: einen zusammenfaltbaren Korb mit Spannsträngen,
- Fig. 2: einen Korb mit hochschiebbarem Verschlußteil,
- Fig. 3: einen Korb mit seitlich verschiebbaren Schiebeprofile,
- Fig. 4: mit senkrecht aufsetzbarem Steckprofil
- Fig. 5: einen Korb mit zusätzlichem Quergurt, und
- Fig. 6: einen Vertikalschnitt durch den Korb.

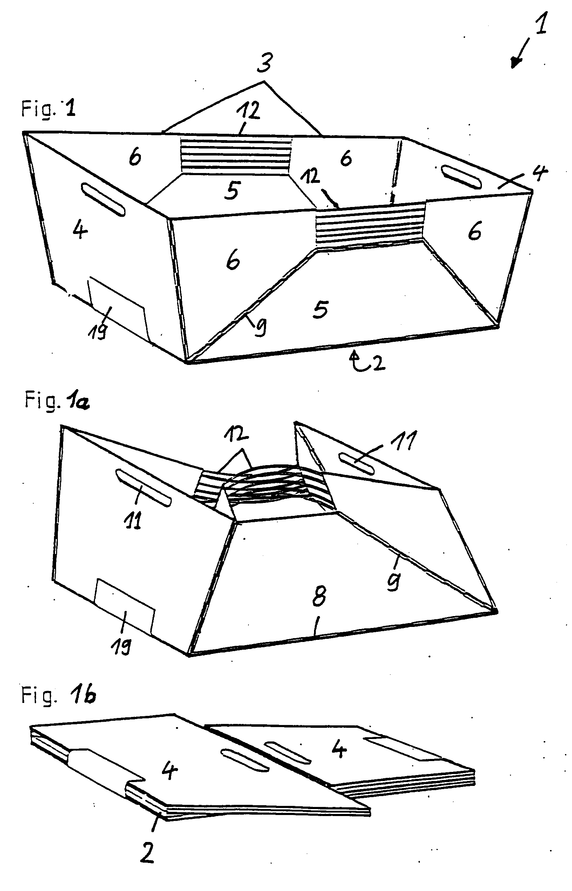

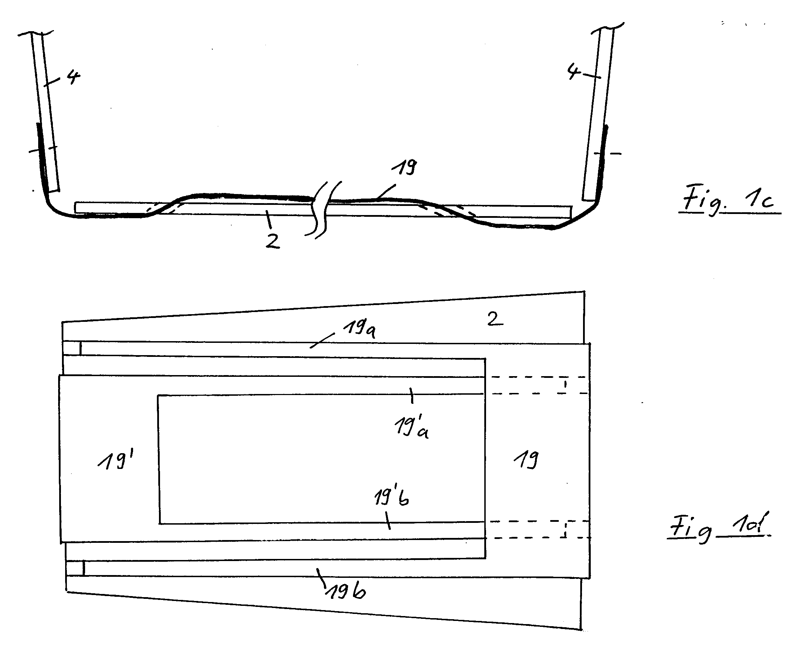

In den Fig. 1 bis 5 ist jeweils in der obersten Figur der Korb im vollständig auseinandergefalteten und in der untersten Figur (Fig. b) der Korb in der vollständig zusammengefalteten Stellung gezeichnet. In letzteter liegen die nach innen geklappten Mittellängsteile 5 auf der Oberseite des Bodenteiles 2 auf. Auf den Mittellängsteilen 5 liegen im zusammengeklappten Zustand (Teilfiguren b) wenigstens teilweise die Stirnlängsteile 6 auf, und auf diesen wiederum die ebenfalls nach innen geklappten schmalen Seitenteile 4. Dabei überlappen sich weder die Schmalseitenteile 4 gegensweitig, noch die beiden Mittellängsteile 5.

Die vorgenannten Teile sind bei allen Varianten in den Fig. 1 bis 5 vorhanden.

In den Fig. 1 sind zusätzlich zwischen den gegeneinander gerichteten Innenkanten der beiden Stirnlängsteile 6 derselben Längsseite, also oberhalb des oberen Endes des Mittellängsteiles 5, mehrere Spannstränge 12 aus elastischem, in Längsrichtung federndem Material angeordnet.

Da bereits der unterste dieser Spannstränge 12 einen Abstand von der Oberkante des Mittellängsteiles 5 besitzt, wird beim Zusammenfalten des Korbes, wie in den Fig. 1a und 1b dargestellt, der Abstand zwischen den beiden befestigten Enden eines Spannstranges verringert, so daß sich diese frei durchbiegen und im vorhandenen Zwischenraum zwischen den Einzelteilen gebogen zu liegen kommen.

Im aufgeklappten Zustand der Fig. 1 sind die Spannstränge, an deren Stelle auch ein durchgehendes, breites Band Verwendung finden könnte, im wesentlichen gespannt, jedoch noch nicht unbedingt auf Zug belastet. Dadurch wird ein Herausfallen von Gegenständen, die oberhalb der Oberkante des Mittellängsteiles 5 gelagert werden, vermieden.

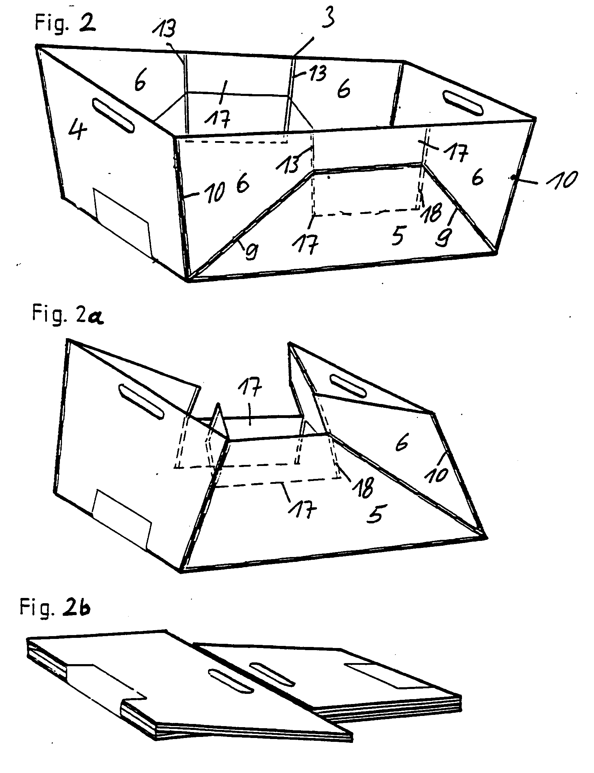

Bei Fig. 2 wird im aufgeklappten Zustand des Korbes 1 der verbleibende Freiraum zwischen den beiden Stirnlängsteilen 6 und den Mittellängsteilen 5 durch ein plattenförmiges, rechteckiges Verschlußteil 17 geschlossen, welches anhand im wesentlichen senkrecht verlaufender Führungen 13 formschlüssig entlang des Mittellängsteiles 5 nach oben und über die Oberkante des Mittellängsteiles 5 hinausschiebbar ist. Dabei greift das Verschlußteil 17 in seinen Randbereichen formschlüssig in entsprechende Führungen an den nach innen gerichteten Seitenkanten der Stirnlängsteile 6 formschlüssig ein, durch das gesamte Längsseitenteil 3 in seiner gestreckten Lage fixiert wird. Ein unbeabsichtigtes Hinabrutschen des Verschlußteiles 17 kann durch ausreichende Haftreibung in den formschlüssigen Führungen 13 vermieden werden, die ja in der Regel aus Nuten mit Hinterschneidungen oder ähnlichem bestehen.

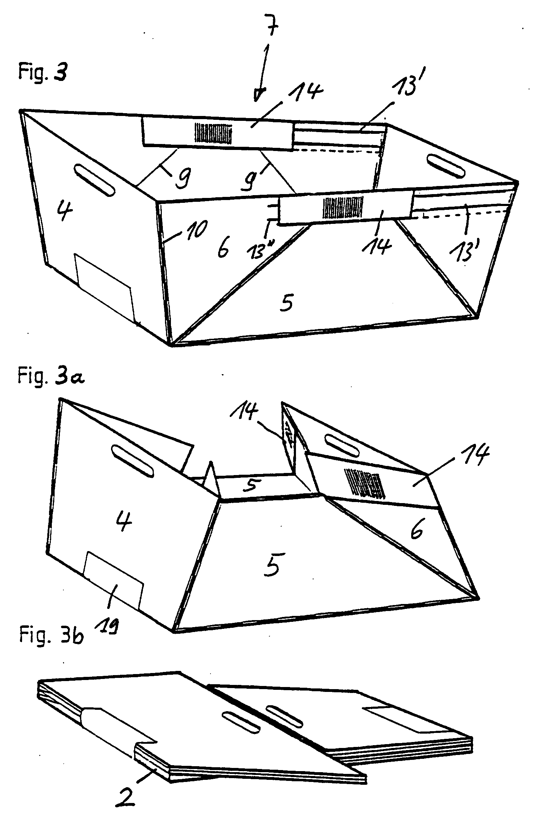

Im Gegensatz dazu wird bei der Lösung gemäß Figur 3 jedes Längsseitenteil 3 und damit der gesamte Korb 1 im aufgeklappten Zustand fixiert, indem ein Schiebeprofil 14 im oberen Bereich eines der Stirnlängsteile 6 entlang waagerechter, vorzugsweise formschlüssiger, Führungen 13' so weit verschiebbar ist, daß das Schiebeprofil 14 dabei wieder den oberen Mittelbereich des Längsseitenteiles 3 abdeckt.

Dabei greift das Schiebeprofil 14 wenigstens am gegenüberliegenden Stirnlängsteil 6 in dort wiederum vorhandene, formschlüssige Führungen 13'' ein und überdeckt auch den oberen Rand des Mittellängsteiles 5.

Das Schiebeprofil 14 kann zu diesem Zweck nur auf den Außenseiten der Längsseitenteile 3 entlang verschoben werden oder sich auch als schmales U-Profil über den oberen Rand hinweg auch auf der Innenseite nach unten erstrecken, wodurch die Stabilität verbessert wird.

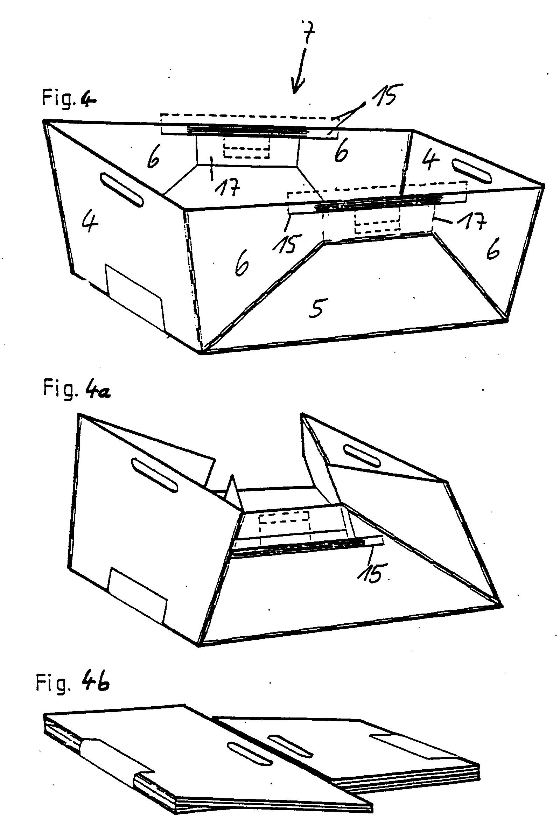

Demgegenüber ist bei der Lösung gemäß Figur 4 das Verschlußteil 17 klappbar mit der Oberkante des Mittellängsteiles 5 verbunden. Die Längsseitenwand 3 wird stabilisiert, indem das Verschlußteil 17 in die Lücke zwischen den fluchtenden Stirnlängsteilen 6 und dem Mittellängsteil 5 geklappt wird und anschließend ein U-förmiges Steckprofil 15 von oben her jeweils über die Fuge zwischen Mittellängsteil 5 und Stirnlängsteil 6 geschoben wird. Vorzugsweise wird hierfür ein einziges, durchgehendes Steckprofil 15 verwendet, welches beide Übergänge gemeinsam abdeckt.

Vorzugsweise ist dabei das Steckprofil 15 mit dem Verschlußteil 17 verbunden, kann jedoch gegenüber dessen oberster Endkante nach oben soweit herausgezogen werden, daß der untere Rand des Steckprofiles 15 höher liegt als die oberen Endkanten der Stirnlängsteile 6. Um die Funktion zu verbessern, ist dabei das Steckprofil 15 mittels eines federnden Elementes an dem Verschlußteil 17 befestigt, so daß dieses federnde Element bestrebt ist, das Steckprofil 15 in die einrastende und sichernde Lage zurückzuziehen.

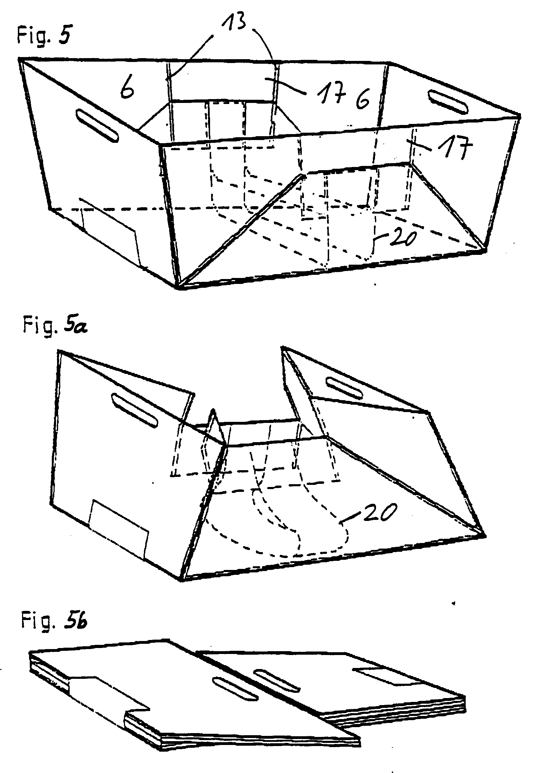

In Figur 5 ist ebenso wie bei der Lösung gemäß Figur 2 das Verschlußteil 17 anhand von Führungen 13 in der Höhe verschiebbar zur Verriegelung mit den Stirnlängsteilen 6. Ein Quergurt 20 verbindet die beiden Verschlußteile 17, und ist mit seinen Enden mit jeweils einem der Verschlußteile 17 verbunden. Dabei ist durch entsprechende Führung des Gurtes sichergestellt, daß durch Hinabdrücken des Gurtes, wie es etwa beim Volladen des aufgeklappten Korbes mit Ware erfolgt, der Quergurt 20 auf die Oberseite des Bodenteiles 2 hinabgedrückt und dadurch die Verschlußteile 17 nach oben gezogen werden.

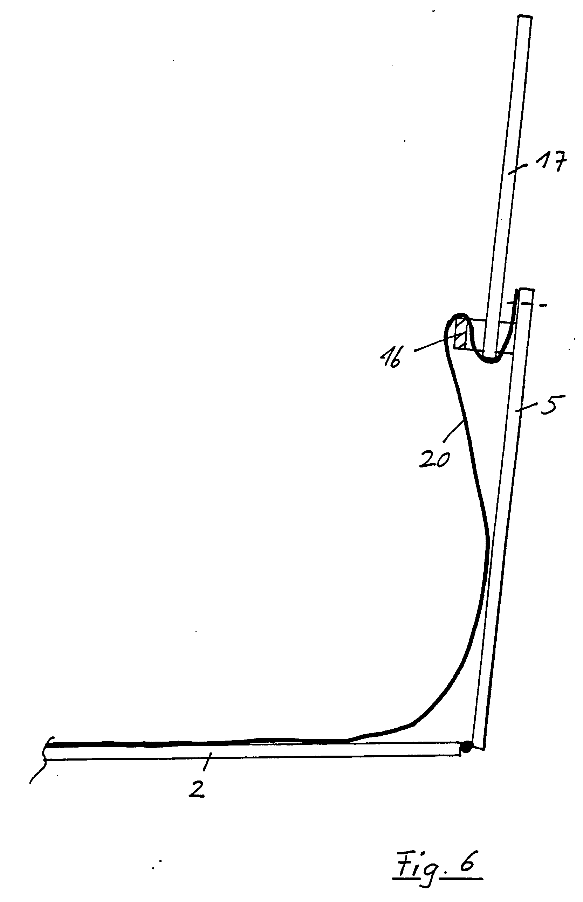

Wie Figur 6 zeigt, ist dies mittels entsprechender Umlenkung des Quergurtes 20 möglich, der mit seinem Ende im oberen Bereich des Mittellängsteiles 5 befestigt ist, und in einer Schlaufe unter dem Verschlussteil 17 und über einen Bügel 16 schlaufenförmig verläuft, der U-förmig im oberen Bereich des Mittellängsteiles 5, seitlich von diesem abstehend, befestigt ist und durch welchen hindurch sich auch das Verschlussteil 17 verschiebbar hindurch erstreckt.

Der dann auf den Bodenteil 2 aufliegende Gurt 20 erhöht zusätzlich die Belastbarkeit des Korbes.

Beim Zusammenfalten wie in Figur 5a dargestellt, legt sich der flexible Quergurt 20 selbsttätig zwischen den Einzelteilen des Korbes zusammen.

## Patentansprüche

1. Zusammenfaltbarer Korb mit einem viereckigen Bodenteil (2), zwei viereckigen Längsseitenteilen (3) und zwei viereckigen Schmalseitenteilen (4), wobei die jeweils benachbarten Seitenteile untereinander sowie jedes der Längsseitenteile (3) mit dem Bodenteil (2) gelenkig miteinander verbunden sind und der Korb (1) an die Innenabmessungen der üblichen fahrbaren Einkaufswägen in Supermärkten etc. im wesentlichen angepaßt und in diese einstellbar ist, dadurch gekennzeichnet, daß die zwei einander gegenüberliegenden Längsseitenteile (3) jeweils aus wenigstens drei gelenkig miteinander verbundenen Teilen bestehen, umfassend ein Mittellängsteil (5) und zwei Stirnlängsteile (6), wobei das Mittellängste (5) eine Unterkante (8) aufweist, die der Längskante des Bodenteiles (2) entspricht und gelenkig mit diesem verbunden ist und Schrägkanten (9) des Mittellängsteiles (5) schräg nach oben verlaufend sich aneinander annähern, und wobei jedes Stirnlängsteil (6) eine Außenkante (10), die mit der Außenkante des angrenzenden Schmalseitenteiles (4) gelenkig verbunden ist, sowie eine Schrägkante (9) aufweist, die mit der Schrägkante des angrenzenden Mittellängsteiles (5) gelenkig verbunden ist, wodurch eine parallele, flächig berührende Lage jeweils zweier miteinander gelenkig verbundener Teile möglich ist.

2. Korb nach Anspruch 1, dadurch gekennzeichnet, daß die Schmalseitenteile (4) untereinander über wenigstens einen Längsgurt (19) miteinander verbunden sind.

3. Korb nach Anspruch 1 oder 2, dadurch gekennzeichnet, daß die Schmalseitenteile (4) sich von unten nach oben trapezförmig verbreitern.

4. Korb nach einem der Ansprüche 1 bis 3, dadurch gekennzeichnet, daß wenigstens eines der Langsseitenteile (3) wenigstens eine Verschlußvorrichtung (7) aufweist, welche die gestreckte, fluchtende Lage der Mittellängsteile (5) und Stirnlängsteile (6) eines Längsseitenteils (3) zueinander und damit den aufgeklappten Zustand des Korbes (1) fixiert.

5. Korb nach einem der Ansprüche 1 bis 4, dadurch gekennzeichnet, daß das Mittellängsteil (5) trapezförmig ausgebildet ist, wobei die Unterkante (8) die Basis des Trapezes bildet.

6. Korb nach einem der Ansprüche 1 bis 5, dadurch gekennzeichnet, daß die Stirnlängsteile (6) trapezförmig ausgebildet sind, wobei die Außenkante (10) die Basis des Trapezes bildet.

7. Korb nach einem der Ansprüche 1 bis 6, dadurch gekennzeichnet, daß die Höhe der Längsseitenteile (3) maximal die Hälfte der Breite des Bodenteiles (2) beträgt und die Höhe der Schmalseitenteile (4) maximal die Hälfte der Länge des Bodenteiles (2) beträgt.

8. Korb nach einem der Ansprüche 1 bis 7, dadurch gekennzeichnet, daß im oberen Mittelbereich jedes Längsseitenteiles (3) im aufgeklappten Zustand des Korbes (1) zwischen den trapezförmigen Mittellängsteilen (5) und den trapezförmigen Stirnlängsteilen (6) ein viereckiges Verschlußteil (17) angeordnet ist.

9. Korb nach Anspruch 8, dadurch gekennzeichnet, daß das Verschlußteil (17) aus wenigstens einem, im aufgeklappten Zustand des Längsseitenteiles (3) in dessen Ebene liegenden, etwa parallel zur Oberkante des Längsseitenteiles (3) verlaufenden, auf Zug belastbaren, elastischen Spannstrang (12) besteht.

10. Korb nach Anspruch 8, dadurch gekennzeichnet, daß das Verschlußteil (17) plattenförmig und in sich stabil, sowie rechteckig ausgebildet ist und mittig im oberen Bereich des Längsmittelteils (5) so in der Höhe parallel bzw. in der Ebene des Mittellängsteiles verschiebbar angeordnet ist, daß im nach oben vorgeschobenen Zustand zusätzlich eine formschlüssige Verbindung der Seitenkanten (18) des Verschlußteiles (17) mit den inneren Seitenkanten der Stirnlängsteile (6) gegeben ist.

11. Korb nach Anspruch 8, dadurch gekennzeichnet, daß das Verschlußteil (17) plattenförmig und in sich stabil, sowie rechteckig ausgebildet ist und mittig im oberen Bereich an einem der Stirnlängsteile (6) so in Längsrichtung parallel bzw. in der Ebene des Mittellängsteiles verschiebbar angeordnet ist, sodaß im verschobenen, verriegelten Zustand zusätzlich eine formschlüssige Verbindung des Verschlußteiles (17) mit dem oberen Bereich des Stirnlängsteiles (6) gegeben ist.

12. Korb nach Anspruch 8, dadurch gekennzeichnet, daß das Verschlußteil (17) plattenförmig und in sich stabil, sowie rechteckig ausgebildet ist und mittig an der oberen Kante des Längsmittelteils (5) gelenkig angeordnet ist, sodaß im nach oben geklappten Zustand zusätzlich eine formschlüssige Verbindung des Verschlußteiles (17) mit den Stirnlängsteilen (6) gegeben ist.

13. Korb nach einem der Ansprüche 1 bis 12, dadurch gekennzeichnet, daß sich entlang des Bodenteiles (2) ein Längsgurt (19) in Längsrichtung erstreckt, dessen Enden mit den unteren Bereichen der beiden Schmalseitenteile (4) fest verbunden sind, daß die Belastbarkeit des Bodenteiles (2) durch die Spannung des Längsgurtes (19) verbessert wird und der Längsgurt (19) durch das Aufklappen des Korbes von einer entspannten in eine gespannte Lage übergeht.

14. Korb nach einem der Ansprüche 1 bis 13, dadurch gekennzeichnet, daß die Längsseitenteile (3) sich von unten nach oben trapezförmig verbreitern.

## Claims

1. A collapsible basket having a tetragonal floor part (2), two tetragonal longitudinal side parts (3) and two tetragonal narrow side parts (4), adjacent side parts being hinged with each other, each of the longitudinal side parts (3) being hinged with the floor part and the basket (1) being essentially adapted, and adaptable to, the interior dimensions of conventional mobile shopping carts in supermarkets and the like, characterized in that the two longitudinal side parts (3) opposing each other consist of at least three hinged parts, including a longitudinal middle part (5) and two longitudinal end parts (6), the longitudinal middle part (5) having a lower edge (8) which corresponds to the longitudinal edge of the floor part (2) and is hinged therewith, slanted edges (9) of the longitudinal middle part (5) approximating each other by running in a slanted upward direction, and each longitudinal end part (6) having an outer edge (10) hinged with the outer edge of the adjacent narrow side part (4) and a slanted edge (9) hinged with the slanted edge of the adjacent longitudinal middle part (5), which allows for a parallel position of two hinged parts respectively in which their surfaces contact each other.

2. A basket according to claim 1, wherein the narrow side parts (4) are interconnected by at least one longitudinal belt (19).

3. A basket according to claim 1 or 2, wherein the narrow side parts (4) increase in width, in the manner of a trapezoid, from the bottom to the top.

4. A basket according to any one of the preceding claims, wherein at least one of the longitudinal side parts (3) has at least one locking device (7) which fixes the stretched, flush positions of the longitudinal middle part (5) and the longitudinal end parts (6) of a longitudinal side part (3) relative to each other and, hence, the unfolded state of the basket (1).

5. A basket according to any of the preceding claims, wherein the longitudinal middle part (5) is shaped like a trapezoid, the lower edge (8) forming the base of the trapezoid.

6. A basket according to any of the preceding claims, wherein the longitudinal end parts (6) are shaped like trapezoids, the outer edge (10) forming the base of the trapezoid.

7. A basket according to any of the preceding claims, wherein the maximum height of the longitudinal side parts (3) is half the width of the floor part (2) and the maximum height of the narrow side parts (4) is half the length of the floor part (2).

8. A basket according to any of the preceding claims, wherein a tetragonal locking element (17) is arranged in the upper middle area of each longitudinal side part (3) in the unfolded state of the basket (1) between the trapezoid-shaped longitudinal middle part (5) and the trapezoid-shaped longitudinal end parts (6).

9. A basket according to claim 8, wherein the locking element (17) consists of at least one elastic tension strand (12) lying in the plane of the longitudinal side part (3) in its unfolded state, running approximately parallel to the upper edge of the longitudinal side part (3) and being able to accomodate tension forces.

10. A basket according to claim 8, wherein the locking element (17) is plate-shaped and stable in itself, as well as rectangularly formed and centrally arranged in the upper area of the longitudinal middle part (5), being parallel displaceable with regard to its height and in the plane of the longitudinal middle part, so that in the upwardly shifted state there is additionally formed a positive lock between the side edges (18) of the locking element (17) and the inner side edges of the longitudinal end parts (6).

11. A basket according to claim 8, wherein the locking element (17) is plate-shaped and stable in itself, as well as rectangularly formed and centrally arranged in the upper area of one of the longitudinal end parts (6), being parallely displaceable in a longitudinal direction and running parallel or in the plane of the longitudinal middle part, so that in the shifted locked state there is additionally formed a positive lock between the locking element (17) and the upper area of the longitudinal end part (6).

12. A basket according to claim 8, wherein the locking element (17) is plate-shaped and stable in itself, as well as rectangularly formed and centrally arranged in a hinged manner on the upper edge of the longitudinal middle part (5), so that in the upwardly folded state there is additionally formed a positive lock between the locking element (17) and the longitudinal end parts (6).

13. A basket according to any preceding claim, wherein a longitudinal belt (19) longitudinally extends along the floor part (2), the ends of which belt are fixedly connected to the lower areas of the two narrow side parts (4), wherein the load carrying capacity of the floor part (2) is improved by the tension of the longitudinal belt (19) and wherein the longitudinal belt (19) passes from a relaxed to a tense state by unfolding the basket.

14. A basket according to any preceding claim, wherein the longitudinal side parts (3) increase in width, in the manner of a trapezoid, from the bottom to the top.

## Revendications

1. Panier repliable ayant une partie de base (2) tétragone, deux parties tétragones (3) du côté longitudinal (3) et deux parties tétragones du côté étroit (2), les adjacentes parties latérales étant articulées l'une à l'autre, chacune des parties du côté longitudinal (3) étant articulée à la partie de base (2) et le panier (1) étant essentiellement adapté, ou pouvant essentiellement être adapté, aux dimensions intérieures des chariots conventionnels utilisés, par exemple, dans les supermarchés, caractérisé en ce que les deux parties du côté longitudinal (3) opposantes sont composées au moins de trois parties articulées, comprenant une partie longitudinale centrale (5) et deux parties longitudinales laterales (6), la partie longitudinale centrale (5) ayant une arête inférieure (8) qui correspond à l'arête longitudinale de la partie de base (2) et est articulée à celle-ci, les arêtes obliques (9) de la partie longitudinale centrale (5) s'approchant l'une de l'autre d'une manière oblique en s'étendant vers le haut et chaque partie longitudinale laterale (6) disposant d'une arête extérieure (10) articulée à l'arête extérieure de l'adjacente partie du côté étroit (4) ainsi que d'une arête oblique (9) articulée à l'arête oblique de l'adjacente partie longitudinale centrale (5), ce qui permet une position parallèle de deux parties respectives articulées dans laquelle leurs surfaces se touchent.

2. Panier selon la revendication 1, caractérisé en ce que les parties du côté étroit (4) sont reliées l'une à l'autre par au moins une bretelle longitudinale (19).

3. Panier selon la revendication 1 ou 2, caractérisé en ce que les parties du côté étroit (4) s'élargissent en forme d'un trapèze du bas vers le haut.

4. Panier selon une des revendications 1 à 3, caractérisé en ce qu'au moins une des parties du côté longitudinal (3) dispose au moins d'une fermeture (7) qui fixe la position étendue et alignée de la partie longitudinale centrale (5) et des parties longitudinales laterales (6) d'une partie du côté longitudinal (3) l'une relative à l'autre et, par conséquence, la condition dépliée du panier (1).

5. Panier selon une des revendications 1 à 4, caractérisé en ce que la partie longitudinale centrale (5) est formée comme un trapèze, l'arête inférieure servant de base du trapèze.

6. Panier selon une des revendications 1 à 5, caractérisé en ce que les parties longitudinales laterales (6) sont formées comme un trapèze, l'arête extérieure (10) servant de base du trapèze.

7. Panier selon une des revendications 1 à 6, caractérisé en ce que la hauteur maximale des parties du côté longitudinal (3) correspond à la moitié de la largeur de la partie de base (2) et que la hauteur maximale de la partie du côté étroit (4) correspond à la longueur de la partie de base (2).

8. Panier selon une des revendications 1 à 7, caractérisé en ce qu'un élément de fermeture (17) est arrangé dans la région centrale de chaque partie du côté longitudinal (3) dans la condition dépliée du panier (1) entre la partie longitudinale centrale (5) en forme de trapèze et les parties longitudinales laterales (6) en forme de trapèze.

9. Panier selon la revendication 8, caractérisé en ce que l'élément de fermeture (17) est composé au moins d'une courroie de tension (12) élastique qui est positionée, dans la condition dépliée de la partie du côté longitudinal (3), dans le plan de celle-ci, s'étend d'une manière parallèle à l'arête supérieure de la partie du côté longitudinal (3) et réçoit à des contraintes de traction.

10. Panier selon la revendication 8, caractérisé en ce que l'élément de fermeture (17) a la forme d'une plaque et une stabilité inhérente, qu'il est formé comme un rectangle et qu'il est arrangé au centre de la région supérieure de la partie longitudinale centrale (5) d'une manière deplaçable parallèlement relatif à son hauteur et dans le plan de la partie longitudinale centrale, de façon à ce qu'il y a en plus, dans la condition déplacée vers le haut, une fermeture géométrique entre les arêtes latérales (18) de l'élément de fermeture (17) et les arêtes latérales intérieures des parties longitudinales laterales (6).

11. Panier selon la revendication 8, caractérisé en ce que l'élément de fermeture (17) a la forme d'une plaque et une stabilité inhérente, qu'il est formé comme un rectangle et qu'il est arrangé au centre de la région supérieure dans une des parties longitudinales laterales (6) d'une manière deplaçable parallèlement dans la direction longitudinale et dans le plan de la partie longitudinale centrale, de façon à ce qu'il y a en plus, dans la condition déplacée et bloquée, une fermeture géométrique entre l'élément de fermeture (17) et la région supérieure de la partie longitudinale laterale (6).

12. Panier selon la revendication 8, caractérisé en ce que l'élément de fermeture (17) a la forme d'une plaque et une stabilité inhérente, qu'il est formé comme un rectangle et qu'il est disposé à l'arête supérieure de la partie longitudinale centrale (5) d'une manière articulée, de façon à ce qu'il y a en plus, dans la condition pliée vers le haut, une fermeture géométrique entre l'élément de fermeture (17) et les parties longitudinales laterales (6).

13. Panier selon une des revendications 1 à 12, caractérisé en ce que le long de la partie de base (2) s'étend une bretelle longitudinale (19) dans la direction longitudinale, les bouts deladite bretelle étant reliés fermement aux régions inférieures des deux parties du côté étroit (4), que la capacité de charge le la partie de base (2) est améliorée par la tension de la bretelle longitudinale (19) et que celle-ci passe d'une condition détendue à une position tendue lorsque le panier est plié.

14. Panier selon une des revendications 1 à 13, caractérisé en ce que les parties du côté longitudinal (3) s'élargissent en forme d'un trapèze du bas vers le haut.
